# EUROPEAN PATENT SPECIFICATION

(11) **EP 2 241 051 B1**
(45) Date of publication and mention of the grant of the patent: **30.11.2016**
(21) Application number: 09707356.3
(22) Date of filing: 06.02.2009
(51) Int. Cl.: H04L 9/08

(54) **KEY DELIVERY SYSTEM AND METHOD**
SYSTEM UND VERFAHREN ZUR SCHLÜSSELÜBERGABE
SYSTÈME ET PROCÉDÉ DE REMISE DE CLÉ

(30) Priority: 08.02.2008 US 28220
(43) Date of publication of application: 20.10.2010
(73) Proprietor: Visa U.S.A. Inc., San Francisco, CA 94128 (US)
(72) Inventor: HAMMAD, Ayman, Pleasanton, California 94566 (US); FAITH, Patrick, Pleasanton, California 94566 (US)
(74) Representative: Eisenführ Speiser
(86) International application number: PCT/US2009/033413
(87) International publication number: WO 2009/100347

(56) References cited:
- EP-A2- 0 110 304
- WO-A2-01/61906
- US-A- 4 731 840
- US-A1- 2004 101 141
- US-A1- 2006 105 748
- US-A1- 2008 029 593
- US-B1- 6 925 182

## Description

### CROSS-REFERENCES TO RELATED APPLICATIONS

### NOT APPLICABLE

### BACKGROUND

It would be desirable to have a process whereby a portable consumer device could "sign" transaction data associated with a transaction (e.g., a purchase transaction) that is being conducted by the portable consumer device, so that the recipient of the transaction data can verify that the portable consumer device being used is in fact authentic. One way to provide for this is to provide the portable consumer device with a private key in a public/private key pair. Transaction data can be signed using the private key in the portable consumer device. The transaction data can then be sent to a recipient who can verify the digital signature associated with the signed data using the public key of the public/private key pair.

One problem to be solved is how to deliver the private key to the portable consumer device. An issuer may issue many portable consumer devices to thousands of consumers. It is difficult to securely deliver private keys to the various portable consumer devices.

Embodiments of the invention address the above problems, and other problems, individually and collectively.

EP 0 110 304 A2 concerns a method of transmitting master keys to enciphering apparatus for transmitting coded messages in which, in order to encode the message, the master key is used together with a variable key in order to set the enciphering apparatus and in which the master key is recorded on a data medium and in which this data medium is transferred in a secure manner to the enciphering apparatus to be supplied.

A method for the encryption, transmission, and subsequent decryption of digital keying data is disclosed in US 4,731,840. The method utilizes the Data Encryption Standard and is implemented by means of a pair of apparatus, each of which is selectable to operate as either a master unit or remote unit. Each unit contains a set of key encryption keys which are indexed by a common indexing system. The master unit operates upon command from the remote unit to generate a data encryption key and encrypt the data encryption key using a preselected key encryption key. The encrypted data encryption key and an index designator are then downloaded to the remote unit, where the data encryption key is decrypted for subsequent use in the encryption and transmission data. Downloading of the encrypted data encryption key enables frequent change of keys without requiring manual entry or storage of keys at the remote unit.

US 2006/0105748 A1 discloses a portable data storage device, which has a non-volatile memory for storing user data, an interface section for receiving and transmitting data to a host, and a master control unit for transferring data to and from the non-volatile memory. The portable data storage device further includes an integrated circuit for generating a public/private key pair. The portable data storage device is arranged to transmit at least one of the keys out of the device. In different embodiments, the host can verify that the data it receives is correct, and the device can verify that the host has received the correct data.

### SUMMARY

Embodiments of the invention are directed to systems, methods, portable consumer devices that can securely deliver encryption keys to transaction devices such as portable consumer devices. In embodiments of the invention, a uniquely derived key (UDK) can be used to encrypt and deliver a key to a portable consumer device operated by a consumer. The UDK is derived from information that is specifically associated with the consumer. Alternatively or additionally, the information may be specifically associated with a portable consumer device that is associated with the consumer. For example, such information may include an account number associated with the consumer, an expiration date associated with the portable consumer device, etc. Once the UDK is derived, it can be used to encrypt a key such as a private key of a public/private key pair. The encrypted private key can be securely provided to (e.g., sent to) the portable consumer device. After the encrypted key is received at the portable consumer device, the portable consumer device can use a derived or previously stored UDK to decrypt the encrypted key. Once the key is decrypted, it is secure in the portable consumer device and can be used. For instance, if the key is a private key in a public/private key pair, then the private key can thereafter be used to digitally sign data to authenticate the portable consumer device in a transaction such as a purchase transaction.

One embodiment of the invention is directed to a method as defined in claim 1.

Another embodiment of the invention is directed to a computer readable medium as defined in claim 12.

These and other embodiments of the invention are described in further detail below.

### BRIEF DESCRIPTION OF THE DRAWINGS

FIG. 1 shows a flowchart illustrating a method according to an embodiment of the invention.
FIG. 2 shows a block diagram showing the distribution of keys in various portable consumer devices.
FIG. 3 shows a block diagram illustrating a method for forming a uniquely derived key.
FIG. 4 shows a block diagram of a system according to an embodiment of the invention.
FIG. 5 shows a flowchart illustrating a method according to an embodiment of the invention.
FIG. 6(a) shows a block diagram illustrating components in a phone.
FIG. 6(b) shows components that may be in a typical payment card.
FIG. 7 shows a block diagram of components in a computer apparatus.

### DETAILED DESCRIPTION

One embodiment of the invention is directed to a method comprising encrypting a first key using a second uniquely derived key to form an encrypted first key. The method also includes providing the encrypted first key to a transaction device such as a portable consumer device, where the transaction device contains the second uniquely derived key. The transaction device may store the second uniquely derived key in a memory.

In the specific embodiments below, a "transaction device" in the form of a portable consumer device is described in detail. It is understood that a transaction device could also include an access device. In embodiments of the invention, an encrypted key may be delivered to any suitable transaction device at one end of a transaction so that the transaction device may sign transaction data that may be received by a second transaction device at another end of the transaction, whereby the second transaction device (e.g., a server computer in a payment processing network) verifies the signed data using a corresponding key. Thus, although the delivery of an encrypted key to a portable consumer device is described in detail below, the same principles may be applied to delivery of an encrypted key to another type of transaction device such as an access device.

### I. Key delivery

Embodiments of the invention are directed to systems, methods, portable consumer devices that can securely deliver encryption keys, etc. In embodiments of the invention, a uniquely derived key (UDK) can be used to encrypt and deliver a first key such as a private key in a public/private key pair, to a portable consumer device operated by a consumer.

The UDK is derived from information that is specifically associated with the consumer. Alternatively or additionally, the information may be specifically associated with a portable consumer device that is associated with the consumer. For example, such information may include an account number associated with the consumer, an expiration date associated with the portable consumer device, a consumer's social security number, a consumer's telephone number, etc. In other embodiments, the UDK may be derived from other types of data. For example, if the UDK is intended for delivery to an access device such as a POS terminal, then the information that is used to generate the UDK may include information such as a terminal ID, location, date of manufacture, etc.

Once the UDK is derived, it can be used to encrypt a key, such as a private key of a public/private key pair, so that it can be securely delivered to a portable consumer device. After the encrypted private key is received at the portable consumer device, the portable consumer device can use a derived or previously stored UDK to decrypt the encrypted private key. Once the private key is decrypted, it is secure in the portable consumer device and can be used. The private key can be used to digitally sign data to authenticate the portable consumer device in a transaction such as a purchase transaction.

In the preferred embodiments that are described herein, the key that is encrypted and delivered to the portable consumer device is a private key in a public/private key pair. It is understood that embodiments of the invention are not limited to this. For example, the encrypted key that is delivered to the portable consumer device could be a symmetric private key, or could even be a public key in a public/private key pair.

It is also noted that although the use of a "public" key is described in detail, it is understood that in embodiments of the invention, a public key may or may not be available to the general public. It can be "public" in the sense that someone other than holder of the private key knows about the public key. For instance, in some cases, the public key may be known to a merchant, issuer, payment processing organization, and acquirer, but may not be known or available to the general public.

Embodiments of the invention have a number of advantages. For example, it is difficult for an unauthorized person to decrypt any private key that has been encrypted with a uniquely derived key. To decrypt the encrypted key, the unauthorized person would have to know the uniquely derived key that was used to encrypt the private key. Since the uniquely derived key is uniquely derived, it is difficult for the unauthorized person to determine. Also, even if the unauthorized person was able to determine the uniquely derived key, knowledge of a particular uniquely derived key would only be useful for a single account. Knowledge of one uniquely derived key will not necessarily apply to other uniquely derived keys, since each key is uniquely derived using unique data.

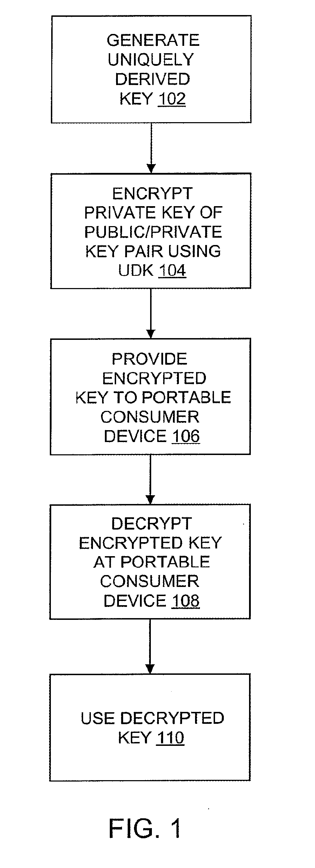

FIG. 1 shows a flowchart illustrating an embodiment of the invention. As shown in FIG. 1, a uniquely derived key can be derived (step 102). Once the uniquely derived key is derived, it can be used to encrypt a key such as a private key of a public/private key pair (step 104). Once the key is encrypted, it can be delivered to a portable consumer device (step 106). Once the portable consumer device receives the encrypted key, the portable consumer device can decrypt the encrypted key using the uniquely derived key that is stored or derived within the portable consumer device (step 108). Once the encrypted key is decrypted, it may be used by the portable consumer device (step 110). For example, the portable consumer device may use the key to sign data to provide an electronic signature. Data may be subsequently received, and the electronic signature may be verified to ensure that the data was generated using an authentic portable consumer device.

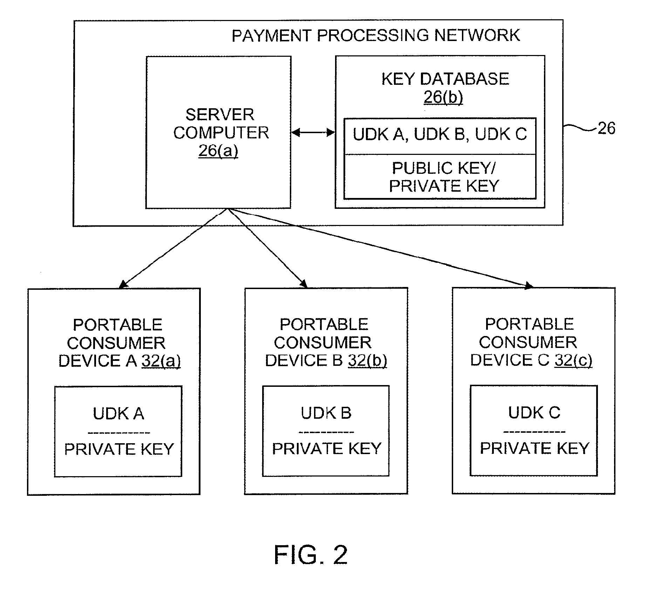

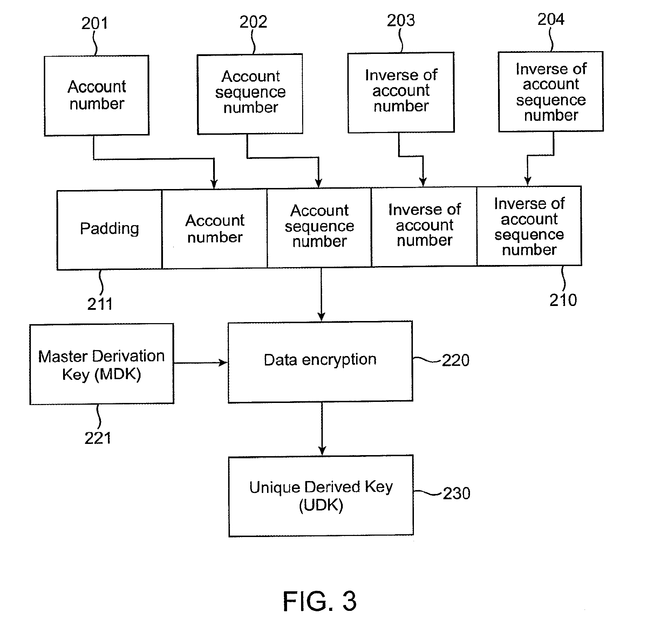

The steps shown in FIG. 1 may be further described with reference to FIGS. 2 and 3. FIG. 2 shows a diagram of some components of a key distribution system. FIG. 3 shows a block diagram illustrating how a uniquely derived key can be formed in one embodiment of the invention.

FIG. 2 shows a block diagram of a key distribution system. The system includes a payment processing network 26 and a number of portable consumer devices 32(a), 32(b), 32(c). The payment processing network 26 may comprise a server computer 26(a) and a key database 26(b) operatively coupled to the server computer 26(a). In this example, the payment processing network 26 may be operated by a payment processing organization such as Visa™. However, in other embodiments, the server computer 26(a) and the key database 26(b) may be operated by another entity such as an issuer or a third party payment processor.

Referring to both FIGS. 1 and 2, first, a uniquely derived key may be derived for each portable consumer device 32(a), 32(b), 32(c) (step 102). If the uniquely derived key is not generated on an as needed basis, it may be derived beforehand and may be stored in the key database 26(b). As shown in FIG. 2, a uniquely derived key A may be created for portable consumer device A 32(a), a uniquely derived key B may be created for portable consumer device B 32(b), and a uniquely derived key C may be created for portable consumer device C 32(c). Since each uniquely derived key (e.g., UDKs A, B, and C) is generated using data personal to the consumers operating the specific portable consumer devices (e.g., portable consumer devices A, B, and C), the uniquely derived keys (UDKs A, B, and C) could be generated by the portable consumer devices A, B, and C (32(a)-32(c)) if they have the same UDK generation algorithm that the payment processing network 26 possesses. Alternatively, they can be previously generated (e.g., by the server computer 26(a) or some other computer apparatus) and stored in the portable consumer devices A, B, and C 32(a), 32(b), 32(c).

An exemplary process for forming a uniquely derived key may be described with reference to FIG. 3. An account number 201, an account sequence number 202, an inverse of the account number 203, and an inverse of the account sequence number 204 are concatenated together to create a concatenated value 210. If necessary, the concatenated value 210 may be padded with zeroes, or some other value 211, to create a string of a predetermined fixed length. In a preferred embodiment, the concatenated value 210 may be 128 bits in length, although the concatenated value is not limited to being this length. The concatenated value 210 is then encrypted 220 using the master derivation key 221 as the encryption key for each encryption stage. The encryption utilized may include any suitable type of encryption methodology. For example, this encryption step may utilize DES, Triple-DES, or AES encryption algorithms. The value resulting from the encryption step 220 is a unique derived key or UDK 230. If desired, the UDK 230 may be further processed to form another UDK. For example, the UDK 230 may be segmented into different parts, and a particular part of the UDK may form a UDK that can be used to encrypt a key. This might be done to make the UDK of suitable length for the selected key encryption process.

Second, once a uniquely derived key is obtained, the private key of the public/private key PAIR is encrypted using the uniquely derived key (step 104). For example, the payment processing network 26 may use the server computer 26(a) to encrypt a private key of the public/private key pair. The encryption process may use an algorithm such as a DES or Triple DES algorithm.

Third, the encrypted key is provided to the portable consumer device (step 106). In some embodiments, the server computer 26(a) may provide the encrypted private key to the portable consumer device A 32(a) via some intermediate entity such as a third party processor. If the portable consumer device A 32(a) is in the form of a phone or a portable computer, the encrypted key may be provided (e.g., downloaded) from the server computer 26(a) to the phone or portable computer via an appropriate communications network (e.g., a wireless network, the Internet, etc.).

Fourth, after the encrypted private key is received by the portable consumer device A 32(a), it is decrypted at the portable consumer device 32(a) (step 108). The portable consumer device A 32(a) may decrypt the encrypted private key using the uniquely derived key A that is in portable consumer device A 32(a). Once the encrypted private key is decrypted, it may be stored within a secure hardware element inside of the portable consumer device A 32(a). It can thereafter be used to digitally sign transaction data associated with a transaction conducted using the portable consumer device.

### II. Purchase Transactions

### A. Exemplary Transaction Systems

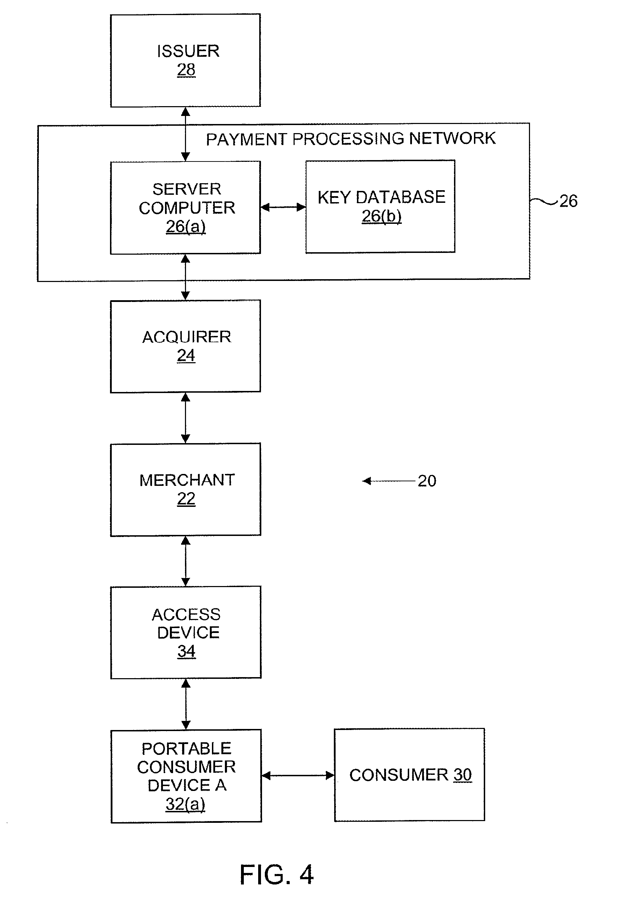

A method of using the delivered public/private key system can be described with reference to FIGS. 4-5.

FIG. 4 shows a block diagram of a purchase transaction system. Embodiments of the invention are not limited to the described embodiments. For example, although separate functional blocks are shown for an issuer, payment processing system, and acquirer, in FIG. 4, some entities perform all of these functions and may be included in embodiments of invention.

FIG. 4 shows a system that can be used in an embodiment of the invention. The system includes a merchant 22 and an acquirer 24 associated with the merchant 22. In a typical payment transaction, a consumer 30 may purchase goods or services at the merchant 22 using a portable consumer device A 32(a). The acquirer 24 can communicate with an issuer 28 via a payment processing network 26.

The payment processing network 26 may include data processing subsystems, networks, and operations used to support and deliver authorization services, exception file services, and clearing and settlement services. An exemplary payment processing network operated by the payment processing organization 20 may include VisaNet™. Payment processing systems such as VisaNet™ are able to process credit card transactions, debit card transactions, and other types of commercial transactions. VisaNet™, in particular, includes a VIP system (Visa Integrated Payments system) which processes authorization requests and a Base II system which performs clearing and settlement services.

The payment processing network 26 may include a server computer 26(a). A server computer is typically a powerful computer or cluster of computers. For example, the server computer can be a large mainframe, a minicomputer cluster, or a group of servers functioning as a unit. In one example, the server computer may be a database server coupled to a Web server. The server computer may also have a processor and a computer readable medium, which comprises code or instructions that the processor can execute. For example, it may comprise code for encrypting a first key using a second uniquely derived key to form an encrypted first key, and code for providing the encrypted first key to a transaction device, where the portable consumer device contains the second uniquely derived key. The payment processing network 26 may use any suitable wired or wireless network, including the Internet.

The merchant 24 may also have, or may receive communications from, an access device 34 that can interact with the portable consumer device 28(a). The access devices according to embodiments of the invention can be in any suitable form. Examples of access devices include point of sale (POS) devices, cellular phones, PDAs, personal computers (PCs), tablet PCs, handheld specialized readers, set-top boxes, electronic cash registers (ECRs), automated teller machines (ATMs), virtual cash registers (VCRs), kiosks, security systems, access systems, and the like.

If the access device 34 is a point of sale terminal, any suitable point of sale terminal may be used including card readers. The card readers may include any suitable contact or contactless mode of operation. For example, exemplary card readers can include RF (radio frequency) antennas, magnetic stripe readers, etc. to interact with the portable consumer device 28(a). It may comprise a computer readable medium comprising code for receiving an encrypted first key, where the first key was previously encrypted using a uniquely derived key, and code for decrypting the encrypted first key using the uniquely derived key.

### B. Exemplary Purchase Methods

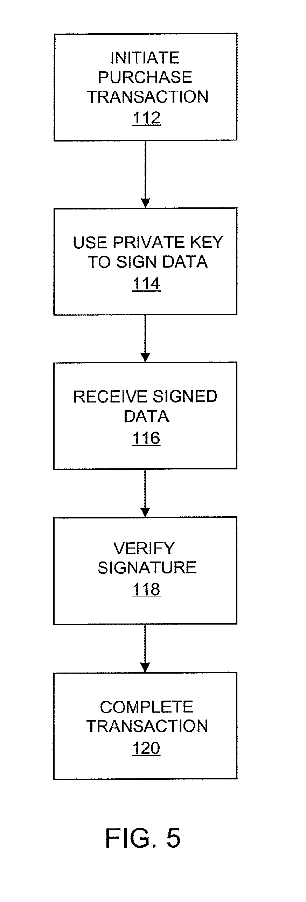

Referring to FIGS. 4 and 5, in a typical purchase transaction, the consumer 30 purchases a good or service at the merchant 22 using the portable consumer device A 32(a) (step 112). The consumer's portable consumer device A 32(a) can interact with an access device 34 such as a POS (point of sale) terminal at the merchant 22. Using the portable consumer device A 28(a) and the private key present therein, the portable consumer device A may sign transaction data and this data may be incorporated into the authorization request message that is to be forward to the acquirer 24 by the access device 34 (step 114). The transaction data may include consumer specific information such as an account number, expiration date, birthday, social security number, etc. Transaction data may also include purchase information such as SKU information, purchase price information, etc.

Before or after the access device 34 receives the signed transaction data, the signed data may be preprocessed on in any suitable manner. For example, the signed data may undergo truncation or decimalization processing before it is incorporated into an authorization request message, and is forwarded by the access device 34 to the payment processing network 26 via the acquirer 24.

After receiving the authorization request message, the authorization request message is then sent to the payment processing network 26.

The payment processing network 26 then receives the signed data (step 116). It then uses the public key of the public/private key pair is used to verify that the signed data are authentic (step 118). The public key, which may be stored in the key database 26(b) can be used to decrypt the signed data and the decrypted information can be verified (e.g., a decrypted account number can be matched with other data in the authorization request message or other data that are stored in a database in the payment processing network 26).

Since the public key is public and can be known by someone other than the consumer 30 or the consumer's portable consumer device 32(a), the public key can also be sent to the issuer 28, acquirer 24, or even the merchant 22. Using the public key, any of these entities may verify the signed data provided portable consumer device 32(a). Thus, embodiments of the invention are not limited to verification of signed data by a payment processing network 26.

After the signed data are verified, the payment processing network 26 then forwards the authorization request message to the issuer 18 of the portable consumer device 32(a).

After the issuer 18 receives the authorization request message, the issuer 18 sends an authorization response message back to the payment processing system 20 to indicate whether or not the current transaction is authorized (or not authorized). If there are insufficient funds or credit in the consumer's account, the transaction may be declined. If there are sufficient funds or credit in the consumer's account, the transaction may be authorized. The payment processing system 20 then forwards the authorization response message back to the acquirer 22. The acquirer 22 then sends the response message back to the merchant 24.

After the merchant 22 receives the authorization response message, the access device 34 at the merchant 22 may then provide the authorization response message for the consumer 30. The response message may be displayed by the POS terminal, or may be printed out on a receipt.

At the end of the day, a normal clearing and settlement process can be conducted by the transaction processing system 20. A clearing process is a process of exchanging financial details between and acquirer and an issuer to facilitate posting to a consumer's account and reconciliation of the consumer's settlement position. Clearing and settlement can occur simultaneously.

### III. Portable consumer devices and computer apparatuses

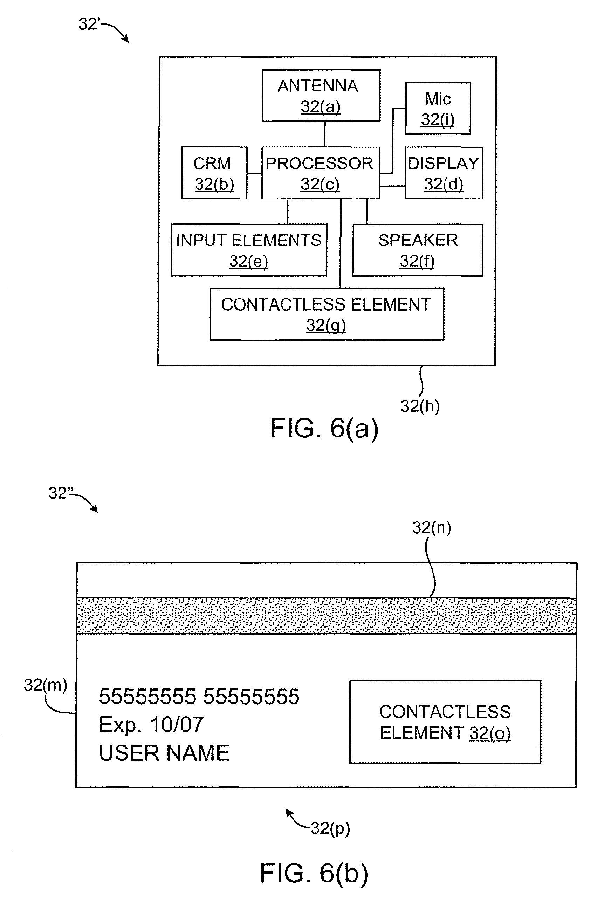

FIGS. 6-7 shows block diagrams of portable computer devices and subsystems that may be present in computer apparatuses in systems according to embodiments of the invention.

The portable consumer device that is used in embodiments of the invention may be in any suitable form. For example, suitable portable consumer devices can be hand-held and compact so that they can fit into a consumer's wallet and/or pocket (e.g., pocket-sized). They may include smart cards, ordinary credit or debit cards (with a magnetic strip and without a microprocessor), keychain devices (such as the Speedpass™ commercially available from Exxon-Mobil Corp.), etc. Other examples of portable consumer devices include cellular phones, personal digital assistants (PDAs), pagers, payment cards, security cards, access cards, smart media, transponders, and the like. The portable consumer devices can also be debit devices (e.g., a debit card), credit devices (e.g., a credit card), or stored value devices (e.g., a stored value card).

An exemplary portable consumer device 32' in the form of a phone may comprise a computer readable medium and a body as shown in FIG. 6(a). (FIG. 6(a) shows a number of components, and the portable consumer devices according to embodiments of the invention may comprise any suitable combination or subset of such components.) The computer readable medium 32(b) may be present within the body 32(h), or may be detachable from it. The body 32(h) may be in the form a plastic substrate, housing, or other structure. The computer readable medium 32(b) may be a memory that stores data and may be in any suitable form including a magnetic stripe, a memory chip, uniquely derived keys (such as those described above), encryption algorithms, private keys, etc. It may comprise code for receiving an encrypted first key, where the first key was previously encrypted using a uniquely derived key, and code for decrypting the encrypted first key using the uniquely derived key. The memory also preferably stores information such as financial information, transit information (e.g., as in a subway or train pass), access information (e.g., as in access badges), etc. Financial information may include information such as bank account information, bank identification number (BIN), credit or debit card number information, account balance information, expiration date, consumer information such as name, date of birth, etc.

Information in the memory may also be in the form of data tracks that are traditionally associated with credits cards. Such tracks include Track 1 and Track 2. Track 1 ("International Air Transport Association") stores more information than Track 2, and contains the cardholder's name as well as account number and other discretionary data. This track is sometimes used by the airlines when securing reservations with a credit card. Track 2 ("American Banking Association") is currently most commonly used. This is the track that is read by ATMs and credit card checkers. The ABA (American Banking Association) designed the specifications of this track and all world banks must abide by it. It contains the cardholder's account, encrypted PIN, plus other discretionary data.

The portable consumer device 32 may further include a contactless element 32(g), which is typically implemented in the form of a semiconductor chip (or other data storage element) with an associated wireless transfer (e.g., data transmission) element, such as an antenna. Contactless element 32(g) is associated with (e.g., embedded within) portable consumer device 32 and data or control instructions transmitted via a cellular network may be applied to contactless element 32(g) by means of a contactless element interface (not shown). The contactless element interface functions to permit the exchange of data and/or control instructions between the mobile device circuitry (and hence the cellular network) and an optional contactless element 32(g).

Contactless element 32(g) is capable of transferring and receiving data using a near field communications ("NFC") capability (or near field communications medium) typically in accordance with a standardized protocol or data transfer mechanism (e.g., ISO 14443/NFC). Near field communications capability is a short-range communications capability, such as RFID, Bluetooth™, infra-red, or other data transfer capability that can be used to exchange data between the portable consumer device 32 and an interrogation device. Thus, the portable consumer device 32 is capable of communicating and transferring data and/or control instructions via both cellular network and near field communications capability.

The portable consumer device 32 may also include a processor 32(c) (e.g., a microprocessor) for processing the functions of the portable consumer device 32 and a display 32(d) to allow a consumer to see phone numbers and other information and messages. The portable consumer device 32 may further include input elements 32(e) to allow a consumer to input information into the device, a speaker 32(f) to allow the consumer to hear voice communication, music, etc., and a microphone 32(i) to allow the consumer to transmit her voice through the portable consumer device 32. The portable consumer device 32 may also include an antenna 32(a) for wireless data transfer (e.g., data transmission).

If the portable consumer device is in the form of a debit, credit, or smartcard, the portable consumer device may also optionally have features such as magnetic strips. Such devices can operate in either a contact or contactless mode.

An example of a portable consumer device 32" in the form of a card is shown in FIG. 6(b). FIG. 6(b) shows a plastic substrate 32(m). A contactless element 32(o) for interfacing with an access device 34 may be present on or embedded within the plastic substrate 32(m). Consumer information 32(p) such as an account number, expiration date, and consumer name may be printed or embossed on the card. Also, a magnetic stripe 32(n) may also be on the plastic substrate 32(m).

As shown in FIG. 6(b), the portable consumer device 32" may include both a magnetic stripe 32(n) and a contactless element 32(o). In other embodiments, both the magnetic stripe 32(n) and the contactless element 32(o) may be in the portable consumer device 32". In other embodiments, either the magnetic stripe 32(n) or the contactless element 32(o) may be present in the portable consumer device 32".

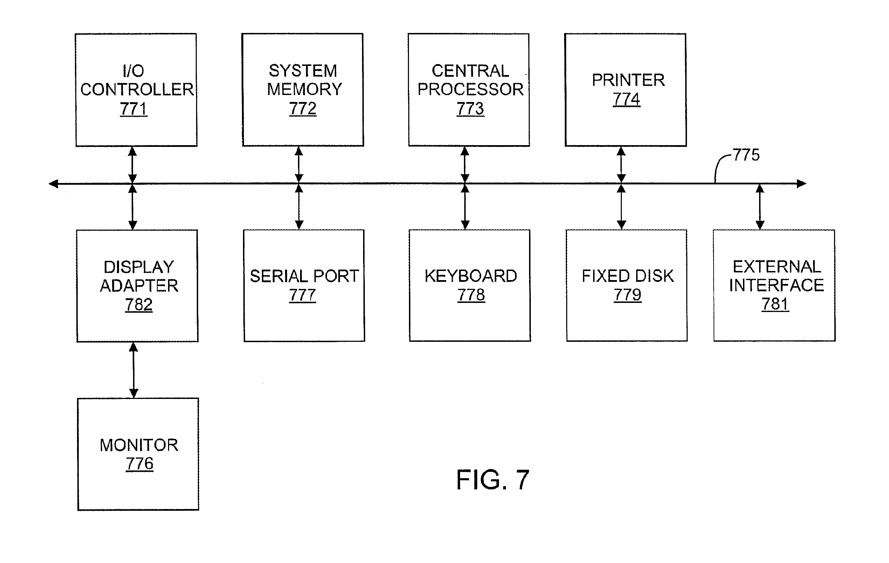

The various participants and elements in FIG. 2 and 4 may operate or use one or more computer apparatuses to facilitate the functions described herein. Any of the elements in FIG. 2 and 4 may use any suitable number of subsystems to facilitate the functions described herein. Examples of such subsystems or components are shown in FIG. 7. The subsystems shown in FIG. 7 are interconnected via a system bus 775. Additional subsystems such as a printer 774, keyboard 778, fixed disk 779 (or other memory comprising computer readable media), monitor 776, which is coupled to display adapter 782, and others are shown. Peripherals and input/output (I/O) devices, which couple to I/O controller 771, can be connected to the computer system by any number of means known in the art, such as serial port 777. For example, serial port 777 or external interface 781 can be used to connect the computer apparatus to a wide area network such as the Internet, a mouse input device, or a scanner. The interconnection via system bus allows the central processor 773 to communicate with each subsystem and to control the execution of instructions from system memory 772 or the fixed disk 779, as well as the exchange of information between subsystems. The system memory 772 and/or the fixed disk 779 may embody a computer readable medium.

The above description is illustrative and is not restrictive. Many variations of the invention will become apparent to those skilled in the art upon review of the disclosure. The scope of the invention should, therefore, be determined not with reference to the above description, but instead should be determined with reference to the pending claims along with their full scope or equivalents.

One or more features from any embodiment may be combined with one or more features of any other embodiment without departing from the scope of the invention.

A recitation of "a", "an" or "the" is intended to mean "one or more" unless specifically indicated to the contrary.

## Claims

1. A method implemented at least in part by computer-executable instructions executed by one or more computers, the method comprising:
encrypting (104), by the one or more computers, a first key using a second uniquely derived key (230) to form an encrypted first key, the first key being a cryptographic signing key configured at least to cryptographically sign transaction data, the second uniquely derived key (230) formed at least in part from an account number (201) corresponding to an account associated with transactions by a user of a transaction device;
providing (106), from the one or more computers, the encrypted first key to the transaction device, wherein the transaction device is configured at least to (i) independently form the second uniquely derived key (230) from the account number (201) corresponding to the account associated with transactions by the user of the transaction device and (ii) responsive to receiving the encrypted first key and independent of user input to the transaction device, decrypt (108) the encrypted first key with the independently formed second uniquely derived key (230) to obtain the unencrypted first key that is the cryptographic signing key and without receiving the second uniquely derived key (230) from the one or more computers;
receiving (116), at the one or more computers, a transaction authorization request with respect to a transaction associated with the account number (201), the transaction authorization request including transaction data signed using the unencrypted first key that was provided in encrypted form by the one or more computers; and
determining, at the one or more computers, that the transaction device is an authentic initiator of the transaction authorization request at least in part by verifying (118) that the transaction data in the transaction authorization request was signed using the unencrypted first key that was provided in encrypted form by the one or more computers.

2. The method of claim 1 wherein the first key is a private key of a public/private key pair, and wherein the transaction device is a portable consumer device (32, 32', 32").

3. The method of claim 1 wherein providing (106) the encrypted first key to the transaction device comprises downloading the encrypted first key to the transaction device.

4. The method of claim 1 wherein the encrypted first key is subsequently decrypted (108) in the transaction device using the second uniquely derived key (230).

5. The method of claim 1 wherein the transaction device is a portable consumer device (32") that is in the form of a payment card.

6. The method of claim 1, wherein forming the second uniquely derived key (230) comprises encrypting information (210) including the account number (201) corresponding to the account associated with transactions by the user of the transaction device with a master derivation key (221).

7. The method of claim 1, wherein the signed transaction data comprises at least a portion of the account number (201).

8. The method of claim 1 further comprising, after determining that the transaction device is an authentic initiator, forwarding the transaction authorization request to an issuer (28) of the account number (201).

9. The method of claim 8, further comprising:
after forwarding the transaction request message to the issuer (28) of the account number (203), receiving an authorization response message from the issuer (28).

10. The method of claim 9, further comprising:
after receiving the authorization response message, forwarding the authorization response message to a merchant (22) that generated the transaction authorization request.

11. The method of claim 10, further comprising:
performing a clearing and settlement process for the transaction after receiving the authorization response message.

12. A computer readable medium having stored thereon computer-executable instructions that, when executed by one or more computers, cause the one or more computers to perform the method of any of the preceding claims.

13. A server computer (26(a)) comprising a processor, and the computer readable medium of claim 12 operatively coupled to the processor.

## Patentansprüche

1. Verfahren, das wenigstens teilweise durch Computer-ausführbare Instruktionen implementiert wird, die von einem oder mehreren Computern ausgeführt werden, wobei das Verfahren umfasst:
Verschlüsseln (104) eines ersten Schlüssels unter Verwendung eines zweiten unikal abgeleiteten Schlüssels (230) durch den einen oder die mehreren Computer zum Bilden eines verschlüsselten ersten Schlüssels, wobei der erste Schlüssel ein kryptografischer Signierschlüssel ist, der wenigstens ausgestaltet ist, Transaktionsdaten kryptografisch zu verschlüsseln, wobei der zweite unikal abgeleitete Schlüssel (230) wenigstens zum Teil aus einer Kontonummer (201) entsprechend einem mit Transaktionen eines Benutzers einer Transaktionsvorrichtung assoziierten Konto gebildet ist,
Bereitstellen (106) des verschlüsselten ersten Schlüssels durch den einen oder die mehreren Computer an die Transaktionsvorrichtung, wobei die Transaktionsvorrichtung wenigstens ausgestaltet ist, (i) den zweiten unikal abgeleiteten Schlüssel (230) und aus der Kontonummer (201) entsprechend dem Konto, das mit Trankaktionen durch den Benutzer der Transaktionsvorrichtung assoziiert ist, unabhängig zu bilden und (ii) in Antwort auf ein Empfangen des verschlüsselten ersten Schlüssels und unabhängig von einer Benutzereingabe in die Transaktionsvorrichtung den verschlüsselten ersten Schlüssel mit dem unabhängig gebildeten zweiten unikal abgeleiteten Schlüssel (230) zu entschlüsseln (108), um den entschlüsselten ersten Schlüssel zu erhalten, der der kryptografische Signierschlüssel ist, ohne dass der zweite unikal abgeleitete Schlüssel (230) durch die Transaktionsvorrichtung von dem einen oder den mehreren Computern empfangen würde,
Empfangen (116) einer Transaktionsautorisierungsanforderung hinsichtlich einer Transaktion an dem einen oder den mehreren Computern, die mit der Kontonummer (201) assoziiert ist, wobei die Transaktionsautorisierungsanforderung Transaktionsdaten aufweist, die unter Verwendung des entschlüsselten ersten Schlüssels signiert wurden, der in verschlüsselter Form durch den einen oder die mehreren Computer bereitgestellt wurde, und
Bestimmen bei dem einen oder den mehreren Computern wenigstens zum Teil durch Verifizieren (118), dass die Transaktionsdaten in der Transaktionsautorisierungsanforderung unter Verwendung des entschlüsselten ersten Schlüssels signiert wurden, der in verschlüsselter Form durch den einen und die mehreren Computer bereitgestellt wurde, dass die Transaktionsvorrichtung ein authentischer Initiator der Transaktionsautorisierungsanforderung ist.

2. Verfahren nach Anspruch 1, wobei der erste Schlüssel ein privater Schlüssel eines asymmetrischen Schlüsselpaars ist, wobei die Transaktionsvorrichtung eine tragbare Verbrauchervorrichtung (32, 32', 32") ist.

3. Verfahren nach Anspruch 1, wobei das Bereitstellen (106) des verschlüsselten ersten Schlüssels an die Transaktionsvorrichtung ein Herunterladen des verschlüsselten ersten Schlüssels in die Transaktionsvorrichtung umfasst.

4. Verfahren nach Anspruch 1, wobei der verschlüsselte erste Schlüssel anschließend in der Transaktionsvorrichtung unter Verwendung des zweiten unikal abgeleiteten Schlüssels (230) entschlüsselt (108) wird.

5. Verfahren nach Anspruch 1, wobei die Transaktionsvorrichtung eine tragbare Benutzervorrichtung (32") ist, die in der Form einer Bezahlkarte vorliegt.

6. Verfahren nach Anspruch 1, wobei das Bilden des zweiten unikal abgeleiteten Schlüssels (230) ein Verschlüsseln von Information (210) einschließlich der Kontonummer (201) entsprechend dem Konto, das mit Transaktionen durch den Benutzer der Transaktionsvorrichtung assoziiert ist, mit einem Master-Ableitungsschlüssel (221) umfasst.

7. Verfahren nach Anspruch 1, wobei die signierten Transaktionsdaten wenigsten einen Teil der Kontonummer (201) umfassen.

8. Verfahren nach Anspruch 1, ferner mit einem Weiterleiten der Transaktionsautorisierungsanforderung an einen Ausgeber (28) der Kontonummer (201) nach einem Bestimmen, dass die Transaktionsvorrichtung ein authentischer Initiator ist.

9. Verfahren nach Anspruch 8, ferner mit:
Empfangen einer Autorisierungsantwortnachricht von dem Ausgeber (28) nach einem Weiterleiten der Transaktionsanforderungsnachricht an den Ausgeber (28) der Kontonummer (203).

10. Verfahren nach Anspruch 9, ferner mit:
Weiterleiten der Autorisierungsantwortnachricht an einen Händler (22), der die Transaktionsautorisierungsanforderung erzeugt hat, nach einem Empfangen der Autorisierungsantwortnachricht.

11. Verfahren nach Anspruch 10, ferner mit:
Durchführen eines Abwicklungs- und Begleichungsprozesses für die Transaktion nach dem Empfangen der Autorisierungsantwortnachricht.

12. Computerlesbares Medium, auf dem computer-ausführbare Instruktionen gespeichert sind, die, wenn sie von einem oder mehreren Computern ausgeführt werden, den einen oder die mehreren Computer veranlassen, das Verfahren nach einem vorstehenden Ansprüche durchzuführen.

13. Server-Computer (26(a)) mit einem Prozessor und einem computerlesbaren Medium nach Anspruch 12, das operativ mit dem Prozessor gekoppelt ist.

## Revendications

1. Procédé mis en oeuvre au moins en partie par des instructions pouvant être exécutées par ordinateur, qui sont exécutées par un ordinateur ou par plusieurs ordinateurs, le procédé comprenant:
chiffrer (104), par l'ordinateur ou les plusieurs ordinateurs, une première clé utilisant une deuxième clé (230) dérivée de manière unique pour former une première clé chiffrée, la première clé étant une clé de signature cryptographique configurée au moins pour signer cryptographiquement une donnée de transaction, la deuxième clé (230) dérivée d'une manière unique étant formée, au moins en partie, à partir d'un numéro (201) de compte correspondant à un compte associé à des transactions par un utilisateur d'un dispositif de transaction;
fournir (106), par l'ordinateur ou les plusieurs ordinateurs, la première clé chiffrée au dispositif de transaction, le dispositif de transaction étant configuré au moins pour (i) former, indépendamment, la deuxième clé (230) dérivée de manière unique du numéro (201) de compte correspondant au compte associé à des transactions par l'utilisateur du dispositif de transaction et (ii) en réaction à la réception de la première clé chiffrée et indépendamment d'une entrée d'utilisateur dans le dispositif de transaction, déchiffrer (108) la première clé chiffrée par la deuxième clé (230) dérivée de manière unique et formée de manière indépendante pour obtenir la première clé non chiffrée qui est la clé de signature cryptographique et sans recevoir de l'ordinateur ou des plusieurs ordinateurs la deuxième clé (230) dérivée de manière unique;
recevoir (116), à l'ordinateur ou aux plusieurs ordinateurs, une demande d'autorisation de transaction en ce qui concerne une transaction associée au numéro (201) de compte, la demande d'autorisation de transaction comprenant une donnée de transaction signée, utilisant la première clé non chiffrée qui est fournie sous une forme chiffrée par l'ordinateur ou par les plusieurs ordinateurs; et
déterminer, à l'ordinateur ou aux plusieurs ordinateurs, que le dispositif de transaction est un initiateur authentique de la demande d'autorisation de transaction, en vérifiant (118) au moins en partie que la donnée de transaction dans la demande d'autorisation de transaction était signée en utilisant la première clé non chiffrée qui était fournie sous une forme chiffrée par l'ordinateur ou par les plusieurs ordinateurs.

2. Le procédé suivant la revendication 1, dans lequel la première clé est une clé privée d'une paire de clés publique/privée et dans lequel le dispositif de transaction est un dispositif (32, 32', 32") portable de consommateur.

3. Le procédé suivant la revendication 1, dans lequel fournir (106) la première clé chiffrée au dispositif de transaction comprend charger la première clé chiffrée dans le dispositif de transaction.

4. Le procédé suivant la revendication 1, dans lequel la première clé chiffrée est ensuite déchiffrée (108) dans le dispositif de transaction en utilisant la deuxième clé (230) dérivée de façon unique.

5. Le procédé suivant la revendication 1, dans lequel le dispositif de transaction est un dispositif (32") portable de consommateur qui est sous la forme d'une carte de paiement.

6. Le procédé suivant la revendication 1, dans lequel former la deuxième clé (230) dérivée de manière unique comprend chiffrer de l'information (210) comprenant le numéro (201) de compte associé au compte associé à des transactions par l'utilisateur du dispositif de transaction par une clé (221) maître de dérivation.

7. Le procédé suivant la revendication 1, dans lequel la donnée de transaction signée comprend au moins une partie du numéro (201) de compte.

8. Le procédé suivant la revendication 1, comprenant en outre, après avoir déterminé que le dispositif de transaction est un initiateur authentique, envoyer la demande d'autorisation de transaction à un émetteur (28) du numéro (201) de compte.

9. Le procédé suivant la revendication 8, comprenant en outre: après avoir envoyé le message de demande de transaction à l'émetteur (28) du numéro (203) de compte, recevoir un message de réponse d'autorisation de l'émetteur (28).

10. Le procédé suivant la revendication 9, comprenant en outre:
après avoir reçu le message de réponse d'autorisation, envoyer le message de réponse d'autorisation à un commerçant (22) qui a créé la demande d'autorisation de transaction.

11. Le procédé suivant la revendication 10, comprenant en outre:
effectuer une opération de liquidation et de règlement de la transaction après avoir reçu le message de réponse d'autorisation.

12. Support déchiffrable par ordinateur, sur lequel sont mémorisées des instructions exécutables par ordinateur, qui, lorsqu'elles sont exécutées par un ordinateur ou par plusieurs ordinateurs, font que l'ordinateur ou les plusieurs ordinateurs effectuent le procédé suivant l'une quelconque des revendications précédentes.

13. Ordinateur (26(a)) serveur comprenant un processeur et le support déchiffrable par ordinateur de la revendication 12 couplé fonctionnellement au processeur.
